**Europäisches Patentamt**

**European Patent Office**

**Office européen des brevets**

(19)

(11) **EP 1 578 031 A2**

(12) **EUROPEAN PATENT APPLICATION**

(43) Date of publication:
21.09.2005 Bulletin 2005/38

(51) Int Cl.$^7$: **H04B 7/005**

(21) Application number: **05251454.4**

(22) Date of filing: **10.03.2005**

| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU** | (72) Inventors:<br>• **Hondo, Shinya, c/o NEC Corporation**<br>  **Tokyo (JP)**<br>• **Tomokiyo, Ryo, c/o NEC Corporation**<br>  **Tokyo (JP)**<br>• **Inaba, Arata, c/o NEC Corporation**<br>  **Tokyo (JP)** |
| (30) Priority: **15.03.2004 JP 2004073052** | |
| (71) Applicant: **NEC CORPORATION**<br>**Tokyo (JP)** | (74) Representative: **Robson, Aidan John**<br>**Reddie & Grose**<br>**16 Theobalds Road**<br>**London WC1X 8PL (GB)** |

(54) **Power control for wireless communications**

(57) A wireless communication system comprises; a wireless communication device; and a wireless base station. The wireless communication device detects a fluctuation of the wireless propagation condition; transmits a first uplink signal at a first transmission power to the wireless base station after detecting the fluctuation of the wireless propagation condition, receives a first downlink signal from the wireless base station; and determines a second transmission power of a second uplink signal based on the first transmission power after the receiving means receives the first down link signal. The wireless base station receives the first uplink signal from the wireless communication device, and transmits the first down link signal to the wireless communication device in response to the first uplink signal after the base station receiving means receives the first uplink signal.

Description

## CROSS REFERENCE TO RELATED APPLICATIONS

The present invention claims priority from Japanese Patent Application No. 073052 filed March 15, 2004, the contents of which are incorporated herein by reference.

## BACKGROUND OF THE INVENTION

The present invention relates to a wireless communication system, and particularly to a technique of establishing synchronization in a mobile communication system.

Recently, as one of communication methods applied to a mobile communication system, spread spectrum communication schemes which resist interference and jamming attract much attention. For instance, in a wireless communication system employing a spread spectrum communication method, a digital modulation is performed on digitized audio or image data by an apparatus on the transmitting side by a modulation method such as PSK (Phase Shift Keying) and FSK (Frequency Shift Keying). Then, the modulated transmission data is converted into a base-band signal occupying a wide bandwidth, by being spread using a spread code such as a pseudo-noise code (PN code: Pseudorandom Noise code). Further, the base-band signal is then converted into an RF signal and transmitted. On the other hand, an apparatus on the receiving side de-spreads the received RF signal using the same spread code as used by the apparatus on the transmitting side, and performs digital demodulation according to a PSK or FSK demodulation method, to reproduce the digitized data from the received data.

3GPP TS25.214 V3.9.0 shows a random access control method where a plurality of mobile stations access a base station, at arbitrary timings and when needed, using a random access channel (RACH). In the method, the base station controls transmission of messages from the mobile station, in response to the access.

In this random access control method, when requesting a call to be made, a mobile station notifies the base station that a message occurs by transmitting a preamble to the base station, prior to transmission of the message. The mobile station generates the preamble by randomly selecting one of the 16 kinds of signatures.

After receiving the preamble, the base station compares a correlated value with a given threshold; and when the correlated value is larger than the given value, the mobile station determines that the preamble is detected, and transmits AICH (Acquisition Indicator Channel) corresponding to the signature to the mobile station. Here, the base station searches all of the 16 kinds of signatures; when none of them are detected, the base station does not transmit AICH. The AICH includes the signature number detected by the base station, and information of ACK or NACK respectively representing permission and non-permission for the mobile station to transmit the message.

When the mobile station receives, in a predetermined time period, the AICH corresponding to the signature number the preamble that has been transmitted, the mobile station transmits the message when ACK is included in the AICH, or exits the random access procedure when NACK is included.

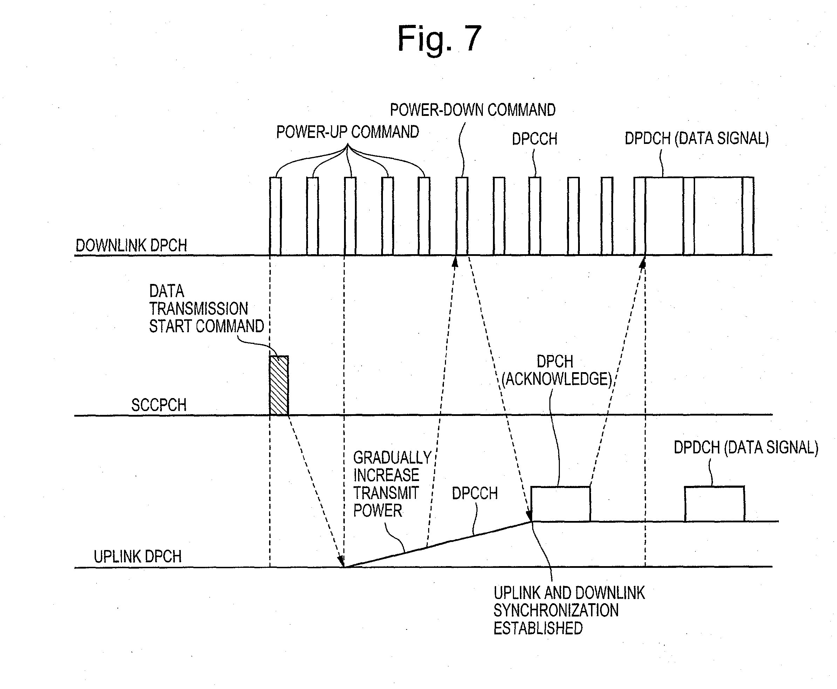

When the mobile station does not receive, in a predetermined time period, the AICH corresponding to the signature number of the preamble that has been transmitted, the mobile station transmits the preamble again, with ramping (i.e., gradually increasing) the transmission power. Related to the way of synchronization establishment in W-CDMA system, which is a wireless communication system using a spread spectrum scheme, the method for enhancing the rate of uplink in W-CDMA system is currently discussed (e.g. 3GPP TS25.896 V1.0.0). 3GPP TS25.896 V1.0.0 proposes a method of establishing synchronization, which is shown in Fig. 7. In Fig. 15, SCCPCH (Secondary Common Control Physical Channel) which is a control signal common to all mobile stations in the cell, is transmitted from a wireless base station (which may be referred to as a wireless base station apparatus). The wireless base station transmits a data transmission start command to a particular one of the mobile stations by means of the SCCPCH. In addition, the wireless base station starts transmission of downlink DPCCH (Dedicated Physical Control Channel), which is a control signal for individual users, to establish synchronization of the downlink to the particular mobile station. On the downlink DPCCH, a command to raise the transmission power of uplink DPCCH (i.e., "POWER-UP" command) is multiplexed.

Upon reception of the data transmission start command on the SCCPCH, the mobile station starts transmission of the uplink DPCCH, which is a control signal for individual users, to establish synchronization of the uplink to the wireless base station. In addition, the mobile station performs a control to gradually increase the transmission power of the uplink DPCCH in accordance with the command to do so from the wireless base station. When synchronization of the uplink is established with the wireless base station successfully receiving the uplink DPCCH, the wireless base station multiplexes a command to lower the transmission power of the uplink DPCCH signal (i.e., "POWER-DOWN" command) on the downlink DPCCH, to notify the mobile station of this fact. The mobile station learns that the synchronization of the uplink has been established through reception of this command and terminates the control to increase the transmission power of the DPCCH, and thereby synchronization of the downlink is established.

Thus the synchronization of the uplink as well as downlink between the wireless base station and the mobile station is established, making it possible to transmit data. Thereafter, the mobile station transmits acknowledgement to the wireless base station using uplink DPDCH (Dedicated Physical Data Channel), and starts transmission of a data signal. Upon reception of the acknowledgement, the wireless base station starts transmission of a data signal using downlink DPDCH.

However, the above-described synchronization establishment sequence where the mobile station gradually increases the transmission power of the uplink DPCCH to establish synchronization suffers from a drawback. That is, when the propagation environment is bad, it takes time until the wireless base station successfully receives the uplink DPCCH, accordingly delaying establishment of the synchronization.

Furthermore, the Japanese laid-open No. JP-A-10(1998)-174157 discloses a method where a mobile station periodically transmits a training signal to a satellite so that even where the mobile station intermittently transmits a data signal, the first data signal can be received with reliability. However, this conventional method is not applicable to the above-described establishment of the synchronization. This is because the training signal periodically being transmitted from the mobile station becomes interference to the other users, inviting reduction in the system capacity.

Therefore, it is desirable that a communication system is capable of decreasing the time required for establishing synchronization between a mobile station and a wireless base station, by inhibiting interference to the other users. However, no such desired communication systems have been proposed or disclosed.

## BRIEF SUMMARY OF THE INVENTION

A wireless communication system comprises a wireless communication device and a wireless base station. The wireless communication device comprises: a monitoring means for monitoring a wireless propagation condition between said wireless communication device and the wireless base station, and for detecting a fluctuation of the wireless propagation condition; a transmitting means for transmitting a first uplink signal at a first transmission power to the wireless base station after the monitoring means detects the fluctuation of the wireless propagation condition; a receiving means for receiving a first downlink signal; and a controlling means for determining and storing a second transmission power of a second uplink signal after the receiving means receives the first down link signal, the second transmission power being determined based on the first transmission power, the second uplink signal being transmitted by the transmitting means at the second transmission power to the wireless base station after the reception of the first down link signal. The wireless base station comprises: a receiving means for receiving the first uplink signal from the wireless communication device, and for receiving a second uplink signal from the wireless communication device; and a transmitting means for transmitting the first down link signal to the wireless communication device in response to the first uplink signal after the base station receiving means receives the first uplink signal.

## BRIEF DESCRIPTION OF THE DRAWINGS

The above and other objects, features and advantages of the invention will become more apparent by describing in detail exemplary embodiments thereof with reference to the attached drawings in which:

Fig. 1 shows a structure of a wireless communication system according to a first embodiment;

Fig. 2 shows an operation in the wireless communication system according to the first embodiment;

Fig. 3 shows an operation in a wireless base station according to the first embodiment;

Fig. 4 shows an operation in a mobile station according to the first embodiment;

Fig. 5 shows an operation in a mobile station according to a second embodiment;

Fig. 6 shows an operation in a mobile station according to a third embodiment;

Fig. 7 shows a method for establishing synchronization in a conventional wireless communication system.

## DETAILED DESCRIPTION OF THE INVENTION

Exemplary embodiments of the invention will now be described below with reference to the attached Figures. The described exemplary embodiments are intended to assist the understanding of the invention, and are not intended to limit the scope of the invention in any way.

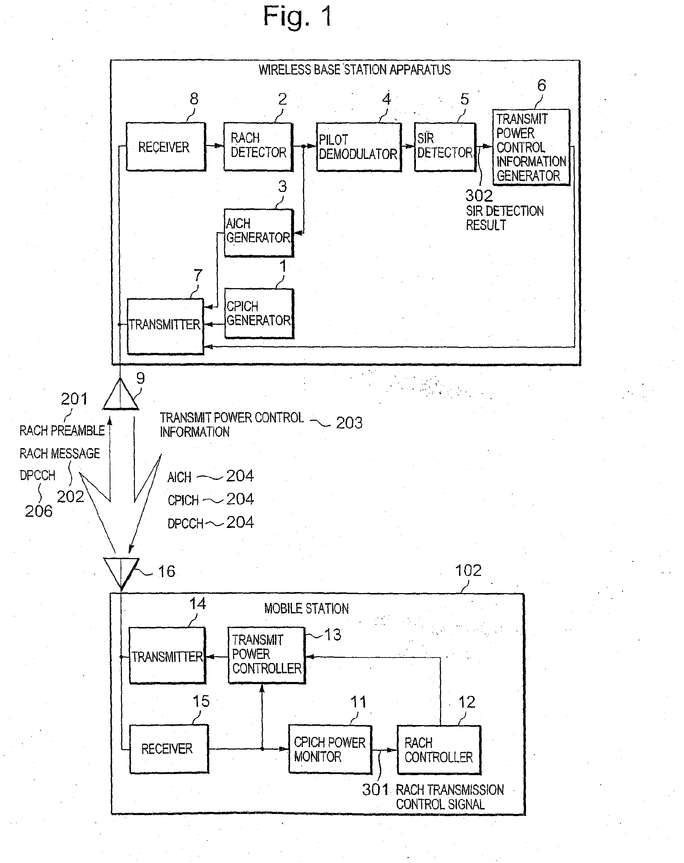

Fig. 1 shows a structure of a system according to a first embodiment of the present invention. As shown in Fig. 1, the system according to the first embodiment comprises a wireless base station 101 and a mobile station 102. Although only a single mobile station 102 is shown in Fig. 1, for the purpose of simplification of illustration only, the number of the mobile stations in the invention is not limited to one.

The wireless base station 101 comprises a CPICH (Common Pilot Channel) generator 1, an AICH generator 2, a RACH detector 3, a pilot demodulator 4, SIR (Signal to Interference Ratio) detector 5, a transmission power control information generator 6, a transmitter 7, and a receiver 8.

The receiver 8 receives signals including at least one of RACH, an uplink DPCCH, and an uplink DPDCH from the mobile station 102. Then, the receiver 8 sends the received signals to the RACH detector 2. The RACH detector receives the signal from the receiver 8 and detect the RACH included in the signal received. Preferably, the RACH detector 2 detects RACH in the signal by following procedures described in 3GPP TS25.214 V3.9.0. The RACH detector notifies the AICH generator of the detection of RACH. In addition, the RACH detector sends the received signal to the pilot demodulator 4. The AICH generator generates AICH in response to the notification of the detection of RACH which is notified by the RACH detector 2. Furthermore, the AICH generator 3 sends the generated AICH to the transmitter 7. The pilot demodulator 4 receives the signal from the RACH detector and demodulate a pilot signal when the pilot signal is included in the signal received. Furthermore, the pilot demodulator 4 sends the demodulated pilot signal to the SIR detector 5. The SIR detector 5 receives the demodulated pilot signal from the pilot detector 4 and detects a SIR of the pilot signal. Furthermore, the SIR detector 5 sends the SIR detection result to the transmission power control information generator 6. The transmission power control information generator 6 receives the SIR detection result and generates transmits power control information based on the SIR detection result. Furthermore, the transmission power control information generator sends the generated information to the transmitter 7. The CPICH generator 1 generates CPICH and sends it to the transmitter 7. The transmitter receives at least one of AICH, CPICH, and the transmission power control information.. Furthermore, the transmitter 7 transmits at least one of AICH, CPICH, the transmission power control information, a down link DPCCH, and a down link DPDCH.

Preferably, the pilot demodulator 4 receives the signal including the pilot signal directly from the receiver instead of receiving the signal via RACH detector 2.

The mobile station 102 comprises a transmitter 14, a receiver 15, a transmission power controller 13, a CPICH power monitor 11, and a RACH controller 12. The receiver 15 receives from the wireless base station 101 at least one of AICH, CPICH, the transmission power control information, the down link DPCCH, and the down link DPDCH. The receiver 15 sends at least one of AICH received and CPICH received to the CPICH power monitor 11, and sends the transmission power control information that may be included in DPCCH to the transmission power controller 13. The CPICH power monitor 11 receives at least one of CPICH and AICH from the receiver 15. The CPICH power monitor 11 monitors the reception power of CPICH and generates RACH transmission control signal based on the CPICH power monitoring result. Furthermore, the CPICH power monitor 11 sends at least one of the RACH transmission control signal and AICH to the RACH controller 12. The RACH controller 12 receives at least one of the RACH transmission control signal and AICH from the CPICH power monitor 11. The RACH controller 12 generates a preamble part of RACH in response to the RACH transmission control signal. In addition, the RACH controller 12 generates a message part of RACH in response to AICH. Preferably the RACH controller 12 generates the preamble part and message part of RACH following procedures described in 3GPP TS25.214. Furthermore, the RACH controller 12 sends at least one of the preamble and message part of RACH to the transmission power controller 13. The transmission power controller 13 receives at least one of the preamble and message of RACH from the RACH controller 12, and receives the transmission power control information from the receiver 15. The transmission power controller controls a transmission power of a signal transmitted by the transmitter 14. Furthermore, the transmission power controller 13 sends at least one of the preamble and message of RACH to the transmitter 14. The transmitter 14 transmits to the wireless base station 101 at least one of the preamble of the RACH, the message of the RACH, the uplink DPCCH, and the uplink DPDCH.

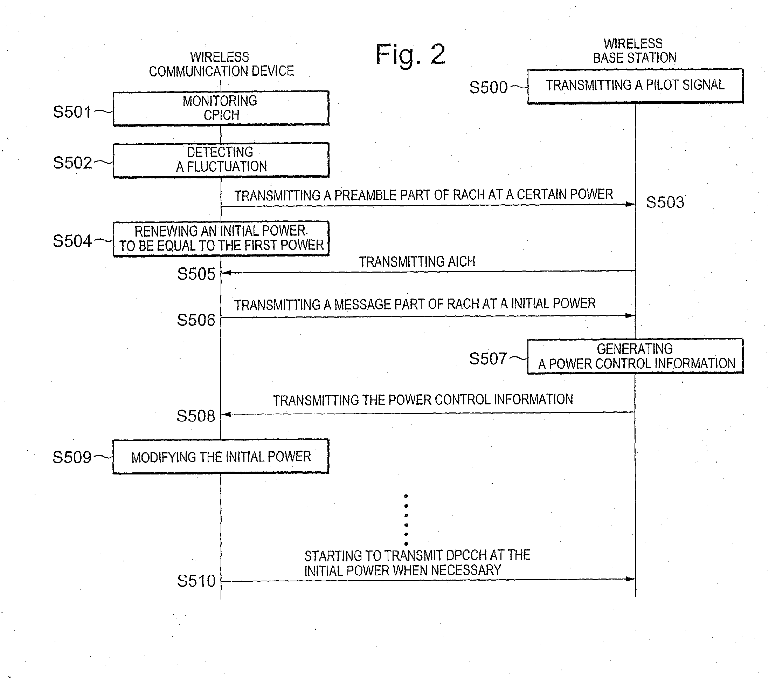

Fig 2 shows an operation of the communication system according to the first embodiment of the present invention. With reference to Figs. 1 and 2, the signal flow in this embodiment will be described.

The wireless base station 101 is arranged to periodically generates CPICH (Common Pilot Channel) 205, at its CPICH generator 1, and transmits the CPICH to the mobile station 102 (S 500).

Upon reception of the CPICH 205, the mobile station 102 measures a receive power at the CPICH power monitor 11 (S501), and outputs a RACH transmit control signal 301 to the RACH controller 12 only when the receive power has been varied by a predetermined threshold value or more (i.e. when the reception power of the CPICH fluctuates.) (S502). In the mobile station 102, the RACH controller 12 transmits a preamble 201 of RACH to the wireless base station 101 when the RACH transmit control signal 301 is inputted, and the transmission power controller 13 holds the transmission power of the preamble transmitted this time as a stored transmission power (i.e. the transmission power controller 13 renews the stored transmission power) (S503 and S 504).

The wireless base station 101 receives the preamble 201 transmitted from the mobile station 102 and detects the preamble 201 at the RACH detector 2. Where the RACH detector 2 in the wireless base station 101 detects the preamble 201, an AICH generator 3 generates AICH 204 and transmits it to the mobile station 102 (S505).

Then, the mobile station 102 receives AICH 204 which the wireless base station 101 has transmitted and outputs the AICH 204 to the RACH controller 12 (S505). With the AICH 204 inputted, the RACH controller 12 transmits a message 202 to the wireless base station 101 at the same transmission power as the preamble which the mobile station 102 holds (i.e. at the stored transmission power) (S506).

The wireless base station 101 receives the message 202 the mobile station 102 has transmitted and detects the message 202 at the RACH detector 2 thereof (S506). Where the RACH detector 2 in the wireless base station 101 detects the message 202, the pilot demodulator 4 calculates a channel estimate value using a pilot signal multiplexed with the message 202. The SIR (Signal to Interference Ratio) detector 5 calculates a SIR estimate value using the channel estimate value. The SIR detector 5 makes a comparison between the SIR estimate value to a SIR threshold, and outputs a SIR detection result 302 to the transmit-power-control-information generator 6. The transmit-power-control-information generator 6 generates transmission power control information 203 using the SIR detection result 302, and transmits the transmission power control information 203 to the mobile station 102 (S509 and S508).

The mobile station 102 receives the transmission power control information 203 the wireless base station 101 has transmitted, and outputs it to the transmission power controller 13 (S508). The transmission power controller 13 modifies the stored transmission power value which the transmission power controller 13 holds, according to the transmission power control information 203 (S509). Now, if necessary, the mobile station may start transmitting an uplink DPCCH at the stored transmission power at which it was confirmed that the preamble and message of RACH could be transmitted properly to the wireless base station 101 (S510).

There will be described an example as to how the pilot demodulator 4 and SIR detector 5 calculate the channel estimate value and SIR estimate value, respectively. Since the pilot signal multiplexed with the message 202 is a known signal, it is possible to calculate the channel estimate using this. A channel estimate value "h" is calculated as follows:

$$h = \frac{1}{N} \sum_{n=1}^{N} Z_c(n)D*(n) \ldots (1)$$

In the above expression (1), "Zc", "D" and "N" respectively represent a pilot signal as demodulated, the known pilot signal, and the number of symbols of the pilot signal. The expression (1) averages the channel estimate values of the respective symbols by the number of the symbols contained in the message 202 of the RACH. The channel variation of a symbol "n" is obtained by multiplying its received signal "Zc" by a complex conjugate "D*" of the known pilot signal. The value "h" as normalized is inputted into the SIR detector 5.

The SIR detector 5 calculates a desired wave signal component "R" and an interference wave signal component "I", using the channel estimate value "h" calculated according to the above expression (1), so as to ultimately obtain the SIR estimate value. The desired wave signal component "R", the interference wave signal component "I", and the SIR estimate value are respectively expressed as follows:

$$R = |h|^2 \tag{2}$$

$$I = \frac{1}{N} \sum_{n=1}^{N} |Zc(n)D*(n) - h|^2 \ldots (3)$$

$$SIR = 10\log_{10}\frac{R}{I} \tag{4}$$

Once the SIR estimate value is obtained, it is compared to the SIR threshold which is stored in advance.

Consequently, the transmit-power-control-information generator 6 generates "POWER-DOWN" information instructing to decreases the transmission power when the SIR estimate value is larger than the SIR threshold, and generates "POWER-UP" information instructing to increase the transmission power when the SIR estimate value is smaller than the SIR threshold.

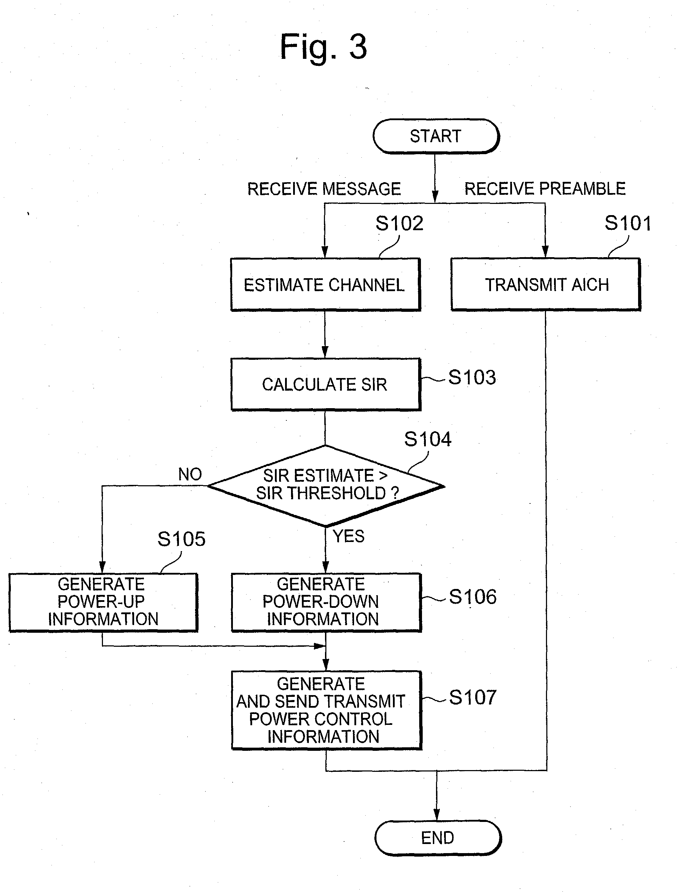

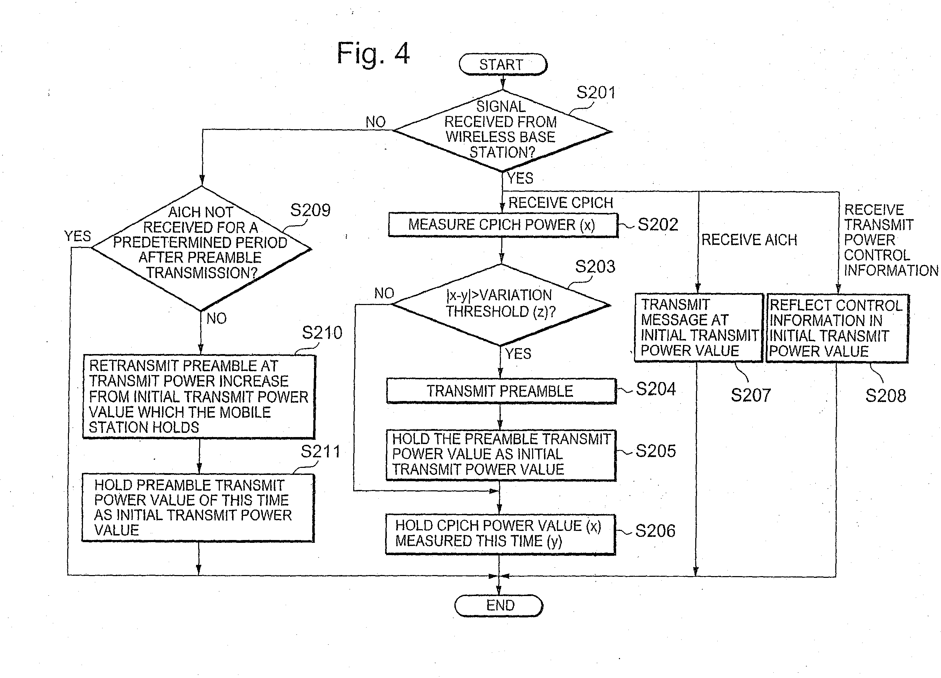

Fig. 3 shows a flowchart for explaining an operation of the wireless base station apparatus 101 of the first embodiment of the invention. Fig. 4 is a flowchart for explaining an operation of the mobile station 102 of the first embodiment of the invention. Referring to Fig 1 to 4, an operation of the wireless base station and the mobile station will be explained in detail. Initially, the operation of the mobile station 102 shown in Fig. 1 will be described, by referring to Fig. 1, 2 and 4. In the mobile station 102, upon reception of CPICH 205 which is periodically transmitted from the wireless base station 101 (S201 in Fig. 4), the CPICH power monitor 11 measures the power value (represented by x) of the received CPICH (S202 in Fig. 4). The CPICH power monitor 11 obtains a difference between the power value "x" and a last measured power value "y", and compares an absolute value of the obtained difference to a predetermined variation threshold "z" (S203 in Fig. 4). When the variation is larger than the predetermined variation threshold "z" (affirmative decision made in S203), the CPICH power monitor I 1 outputs the RACH transmit control signal 301 to the RACH controller 12. When the RACH transmit control signal 301 is inputted, the RACH controller 12 transmits the preamble 201 of RACH to the wireless base station apparatus 101 (S204 in Fig. 4). The RACH controller 12 or the transmission power controller 13 holds the transmission power value of the preamble transmitted this time, as the stored initial transmission power value (S205 in Fig. 4). The CPICH power monitor 11 holds the CPICH power value x as measured this time, as the last measured power value y measured last time (S206 in Fig. 4). On the other hand, when the variation is equal to or smaller than the predetermined variation threshold z (negative decision made in S203), the flow goes to step S206 in Fig. 4.

In a case where the mobile station 102 has not received AICH 204 for a predetermined time period after the preamble 201 is transmitted to the wireless base station 101 (negative decision made in S209 in Fig. 4), the mobile station 102 again transmits the preamble 201, with ramping (gradually increasing) the transmission power of the preamble 201 (S210 in Fig. 4). The RACH controller 12 or the transmission power controller 13 holds the transmission power value of the preamble 201 as has been subjected to the ramping as the stored initial transmission power value (S211 in Fig. 4).

A combination of the steps S201 and S202 in Fig. 4 corresponds to the step S501 in Fig. 2. A combination of the steps 203 and 206 in Fig. 4 corresponds to the step S502 in Fig. 2. In addition, a combination of the steps S205, S204 and S209 to S211 in Fig. 4 corresponds to a combination of the steps S503 and S504 in Fig. 2.

Then, referring to Fig. 1, 2, and 3, operation of the wireless base station 101 shown in Fig. 1 will be described. Upon reception of the preamble 201 transmitted from the mobile station 102, the wireless base station 101 generates AICH 204 and transmits it to the mobile station 102 (S101 in Fig. 3). S101 in Fig. 3 corresponds to the step S505 in the Fig. 2.

Referring back to Fig. 1, 2, and 4, in the mobile station 102, upon reception of the AICH 204 transmitted from the wireless base station 101, the RACH controller 12 transmits the message 202 to the wireless base station 101 at the same transmission power value as the transmission power value of the preamble (i.e. the stored initial transmission power) which is held (S207 in Fig. 4). The step S207 in Fig. 4 corresponds to the step S 506 in Fig. 2.

Referring back to Fig. 1,2 and 3, in the wireless base station 101, upon reception of the message 202 transmitted from the mobile station 102, the pilot demodulator 4 calculates the channel estimate value using the pilot signal multiplexed with the message 202 (S102 in Fig. 3). The SIR detector 5 calculates the SIR estimate value using the channel estimate value (S103 in Fig. 3), compares the SIR estimate value to the predetermined SIR threshold (S104 in Fig. 3), and outputs the SIR detection result 302 to the transmit-power-control-information generator 6. The transmit-power-control-information generator 6 references the SIR detection result 302. When the SIR estimate value is larger than the SIR threshold (affirmative decision made in S104), the transmit-power-control-information generator 6 generates "POWER-DOWN" information (instructions for the mobile station 102 to decrease the transmission power) (S106 in Fig. 3). When the SIR estimate value is equal to or smaller than the SIR threshold (negative decision made in S 104), transmit-power-control-information generator 6 generates the transmission power control information 203 including "POWER-UP" information (instructions for the mobile station 102 to increase the transmission power) (S105 in Fig. 4). The transmit-power-control-information generator 6 transmits the generated transmission power control information to the mobile station 102 (S107 in Fig. 3). A combination of the steps 102 to 106 in Fig. 3 corresponds to the step S507 in Fig. 2. In addition, the step 107 in Fig. 3 corresponds to the step S508 in Fig. 2.

Referring again back to Fig. 1, 2 and 4, in the mobile station, upon reception of the transmission power control information 203 transmitted from the wireless base station 101, the transmission power controller 13 increases or decreases the stored initial transmission power value it holds (S208 in the Fig. 4). Now, if necessary, the mobile station may start transmitting an uplink DPCCH at the stored initial transmission power at which it was confirmed that the preamble and message of RACH could be transmitted properly to the wireless base station 101 (S510). The step S208 in Fig. 4 corresponds to the step S509 in Fig. 2.

The embodiment of the invention described above may obtain the following effects.

(A) According to the embodiment where the initial transmission power is updated beforehand and stored to be adapted to the propagation environment prior to transmission of a data signal, the time required for establishing synchronization between the base station and the mobile station can be reduced when transmission of a data signal is to be started. That is, by the response (AICH) of the wireless base station to the preamble, the mobile station can learn that the wireless base station has successfully received the preamble transmitted at the initial transmission power value which the mobile station currently holds. In addition, since a message has a data length larger than that of a preamble, the initial transmission power can be adjusted with enhanced precision, based on the response to a message (transmission power control information) from the wireless base station.

(B) In addition, according to the embodiment where the mobile station transmits the preamble and message of RACH and updates the initial transmission power value, by being triggered by a change in propagation environment of the downlink, the interference to the other users can be reduced. The RACH preamble is transmitted at the minimum frequency required. Further, by employing the initial transmission power adapted to the propagation environment, even when the propagation environment is deteriorated, a repetition of transmission of uplink DPCCH by the mobile station until the wireless base station can receive the uplink DPCCH is prevented. In addition, the initial transmission power of the uplink DPCCH is prevented from becoming larger than necessary when the propagation environment is improved as well.

Since the CPICH is commonly received by the respective mobile stations in a cell, the CPICH does not interfere with the other users, unlike the case of the individual training signals transmitted from the respective mobile stations.

In paragraph [0020] of a Japanese laid-open JP-A-2002-247626, it is described that attenuation due to distance, shadowing, etc., that constitutes a large part of the propagation loss is equal between uplink and downlink. Therefore, when a propagation loss in the downlink from a base station is small, there is a high probability that the propagation loss in the uplink to the base station is also small. This is particularly apparent in the wireless communications systems where the frequency of the uplink and downlink is the same, such as one according to the W-CDMA/TDD scheme. The present invention utilizes this characteristic, namely, it regards quality deterioration in the downlink as that of the uplink and utilizes the receive power of the CPICH of the downlink as a trigger to transmit RACH from the mobile station.

(C) According to the embodiment, the initial transmission power can be determined in immediate response to a change in propagation environment. More specifically, since the mobile station constantly monitors the receive power of CPICH and transmits RACH to the wireless base station, by being triggered by a change in the propagation environment of the downlink, a more prompt control is enabled compared to an arrangement where RACH is periodically transmitted.

(D) According to the embodiment, the power consumption of the mobile station can be reduced. This is because, it is arranged such that the RACH is not periodically transmitted, but is transmitted at the minimum frequency required by being triggered by a change in the propagation environment of the downlink, as described above.

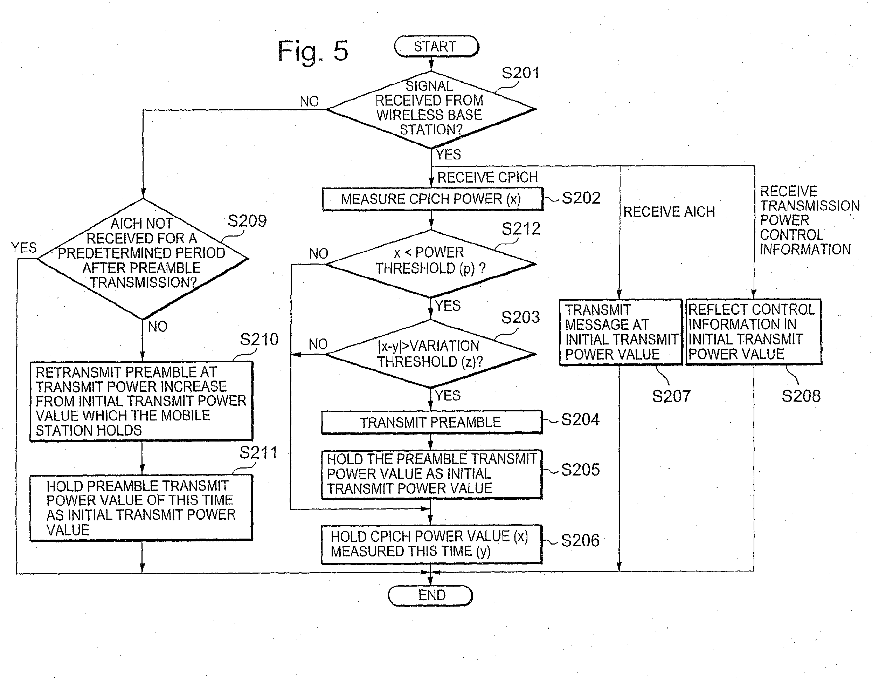

There will be described a second embodiment of the invention. A system structure according to the second embodiment of the invention is identical with that shown in Fig. 1, except that an operation of a mobile station 102 is different from that in the first embodiment described in Fig. 4. Fig. 5 is a flowchart for explaining the operation of the mobile station 102 of the second embodiment. When referring to Figs. 4 and 5, it is seen that there is added, after the CPICH power measuring step S202, step S212 in which it is determined whether a measured value x of CPICH power is equal to or larger than a predetermined power threshold p.

Referring to Fig. 5, in the mobile station 102, upon reception of CPICH 205 periodically transmitted from a wireless base station 101 (S201), a CPICH power monitor 11 measures a power value (represented by x) of the CPICH received (S202). When the measured power value x is equal to or larger than a predetermined power threshold p (negative decision made in S212), the RACH controller 12 does not transmit the preamble and then the CPICH power monitor holds the CPICH power value x measured this time as a last measured power value y (S206).

On the other hand, when the power value x of the CPICH is smaller than the power threshold p (affirmative decision made in S212), the CPICH power monitor 11 obtains a difference between the power value x and the last measured power value y, and compares the difference with a predetermined variation threshold z. When an absolute value of the difference is larger than the variation threshold z (affirmative decision made in S203), RACH transmit control signal 301 is outputted to a RACH controller 12, while when the absolute value of the difference is equal to or smaller than z, the flow goes to step S206 (negative decision made in S203).

When the RACH transmit control signal 301 is inputted, the RACH controller 12 transmits the preamble 201 to the wireless base station apparatus 101 (S204). In addition, The RACH controller 12 holds the transmission power value of the preamble transmitted this time as the stored initial transmission power value (S205). The CPICH power monitor 11 holds the CPICH power value x measured this time as the last measured power value y (S206).

In the present embodiment, the combination of steps S203, S206, and S212 in Fig. 5 corresponds to the step S 502 in Fig. 2.

In the present embodiment, the power threshold p is added to the criterion for determining whether to transmit RACH so that when the propagation environment is good to some extent, RACH is not transmitted, thereby reducing the interference to the other users.

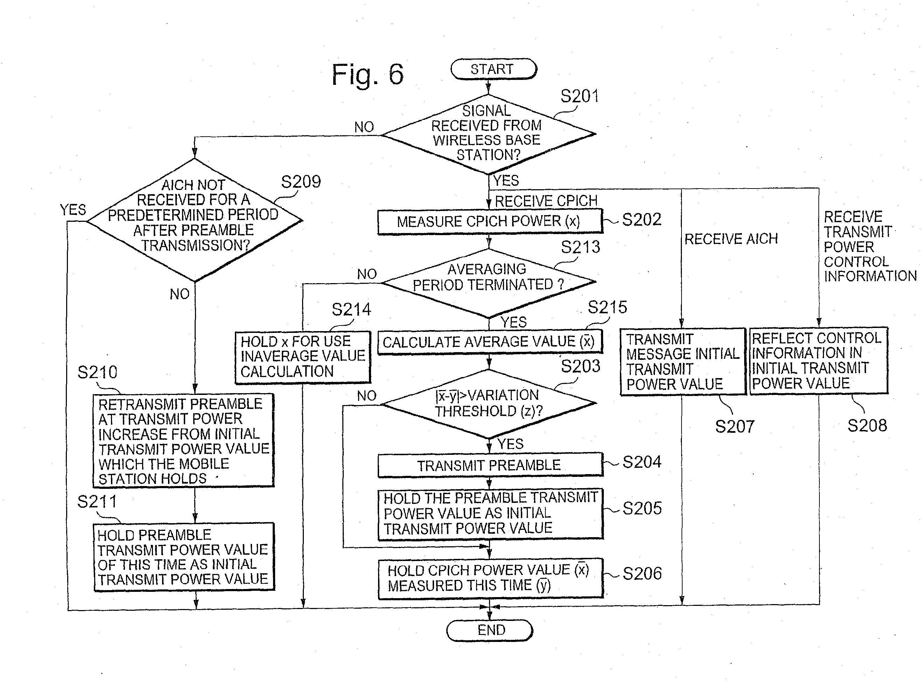

There will be described a third embodiment of the invention. A system structure according to the third embodiment is identical with that shown in Fig. 1, except that an operation of a mobile station 102 is different from that in the embodiment described in Fig. 3. Fig. 6 is a flowchart illustrating the operation of the mobile station 102 of the third embodiment. When referring to Figs. 3 and 6, it is seen that after the CPICH power measuring step S202 there are added steps S213, S214 and S215. In S213, it is determined whether an averaging period is terminated. When it is determined that the averaging period is terminated, an average of measured values x of CPICH power is calculated in step S215, while when it is determined that the averaging period is continuing, the measured value x of CPICH power is held for use in calculation of the average of the measured values x in step S214. In step S203, a variation between averages of the measured values x is compared to a variation threshold.

Referring to Fig. 6, in the mobile station 102, upon reception of CPICH 205 periodically transmitted from a wireless base station 101 (S201), a CPICH power monitor 11 measures a power value (represented by x) of the CPICH received (S202). When the averaging period for calculating an average of a CPICH power value is continuing (negative decision made in S213), the RACH controller 12 does not transmit a preamble, and then the CPICH power monitor holds the CPICH power value x measured this time for use in calculation of a CPICH average power value (S214). On the other hand, when the averaging period for calculating an average of CPICH power value is terminated (affirmative decision made in S213), the CPICH power monitor 11 calculates a CPICH average power value (represented by 'x) (S215) and obtains a difference between the average power value'x and the last calculated average power value (represented by y). When a variation between the average is larger than a variation threshold z (|'x-'y|> z) (affirmative decision made in S203), a RACH transmit control signal 301 is outputted to a RACH controller 12, while when the variation between the average is equal to or smaller than the variation threshold z, the flow goes to step S206.

When the RACH transmit control signal 301 is inputted, the RACH controller 12 transmits the preamble 201 to the wireless base station apparatus 101 (S204). The RACH controller 12 or the transmission power controller 13 further holds the transmission power value of the preamble transmitted this time as the stored initial transmission power value (S205). The CPICH power monitor 11 holds the CPICH average power value'x calculated this time as the last calculated CPICH average power value'y (S206).

In the present embodiment, the combination of steps S203, S206, and S213 to S215 in Fig. 6 corresponds to the step S 502 in Fig. 2.

According to the present embodiment, the RACH transmission is performed based on the variation in the CPICH average power value, so that an additional effect may be obtained such that a stable control against the change in propagation environment is enabled. That is, when the moving speed of the mobile station is high, the phasing variation increases and the CPICH receive power becomes easily variable, causing a frequent RACH transmission, which leads to a possibility that the interference to the other users increases.

It may be arranged such that after RACH is transmitted, the next RACH transmission is not performed for a predetermined time period even when a variation in the CPICH power value is large, so as to prevent frequent RACH transmission in a case where a change in the propagation environment is large.

The present invention is not limited to the above-described embodiments, but is also applicable to a wireless communication system employing other schemes than W-CDMA, such as OFDM (Orthogonal Frequency Division Multiplexing).

The training signal the mobile station transmits to the wireless base station, and the response signal from the wireless base station are not limited to the RACH preamble and message, and AICH.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the following claims.

**Claims**

1. A wireless communication device comprising:

   a monitor which monitors a wireless propagation condition between said wireless communication device and a wireless base station, said monitor detecting a fluctuation of the wireless propagation condition;
   a transmitter which is coupled to said monitor, said transmitter transmitting a first uplink signal at a first transmission power to the wireless base station after the monitor detects the fluctuation of the wireless propagation condition;
   a receiver which is coupled to said monitor, said receiver receiving a first downlink signal responsive to the first uplink signal from the wireless base station; and
   a controller which is coupled to said monitor, said receiver, and said transmitter, said controller determining and storing a second transmission power of a second uplink signal after said receiver receives the first down link signal, the second transmission power being determined based on the first transmission power, and the second uplink signal being transmitted by said transmitter at the second transmission power to the wireless base station after the reception of the first down link signal.

2. A wireless communication device according to claim 1, wherein said transmitter transmits the first uplink signal before starting to transmit an uplink data signal to the wireless base station, and the second uplink signal comprises the uplink data signal.

3. A wireless communication device according to claim 1, said receiver receives a pilot signal from the wireless base station, and said monitor detects the fluctuation of the wireless propagation condition by monitoring a reception power of the pilot signal.

4. A wireless communication device according to claim 3, wherein said monitor monitors an average of the reception power of the pilot signal over a predetermined period of time, and detects the fluctuation of the wireless propagation condition when the average exceeds a predetermined value.

5. A wireless communication device according to claim 3, wherein said monitor detects the fluctuation of the wireless propagation condition when a fluctuation of the reception power of the pilot signal exceeds a predetermined value and a current reception power of the pilot signal is less than a predetermined value.

6. A wireless communication device according to claim 1, said transmitter transmits the first uplink signal repeatedly increasing the first transmission power until said receive receives the first down link signal in response to the first uplink signal in a predetermined period of time from each transmission of the first uplink signal.

7. A wireless communication device according to claim 1, wherein said receiver receives a second down link signal responsive to the second uplink signal from the wireless base station, said controller determines and stores a third transmission power of a third uplink signal after said receiver receives the second down link signal, the third transmission power is determined based on the second transmission power, and the third uplink signal is transmitted at the third transmission power by said transmitter to the wireless base station after the reception of the second down link signal.

8. A wireless communication device according to claim 7, wherein said transmitter transmits the first and second uplink signal before starting to transmit an uplink data signal to the wireless base station, and the third uplink signal comprises the uplink data signal.

9. A wireless communication device according to claim 7, wherein the second down link signal comprises transmission power control information, and the third transmission power is determined based on the second transmission power and the transmission power control signal.

10. A wireless communication device according to claim 9, wherein the transmission power control information comprises one of a direction to increase a transmission power and a direction to decrease a transmission power, and said controller determines the third transmission power by modifying the second transmission power according to one of the directions.

11. A wireless communication device according to claim 9, wherein the transmission power control information is generated based on a reception quality of the second uplink signals.

12. A wireless communication device according to claim 11, wherein the reception quality is a signal to interference ratio, and the transmission power control information comprises a direction to decrease a transmission power when the reception quality is more than a predetermined value and comprises a direction to increase a transmission power when the reception quality is less than the predetermined value.

13. A wireless base station comprising:

a receiver which receives a first uplink signal from a wireless communication device, the first uplink signal being transmitted from communication device after a fluctuation of a wireless propagation condition between said wireless base station and a wireless communication system is detected, and the first uplink signal being transmitted at a first transmission power; and
a transmitter which is coupled to said receiver, said transmitter transmitting a first down link signal to the wireless communication device in response to the first uplink signal after said receiver receives the first uplink signal, wherein
said receiver receives a second uplink signal from the wireless communication device, the second transmission signal is transmitted at a second transmission power, and the second transmission power is determined in response to the first down link signal and based on the first transmission power.

14. A wireless base station according to claim 13, wherein said receiver receives the first uplink signal before receiving an uplink data signal from the wireless communication device, and the second uplink signal comprises the uplink data signal.

15. A wireless base station according to claim 13, wherein said transmitter transmits a pilot signal, the fluctuation of the wireless propagation condition is detected by monitoring a reception power of the pilot signal.

16. A wireless base station according to claim 13, wherein said transmitter transmits a second down link signal to the wireless communication device in response to the second uplink signal, said receiver receives a third uplink signal from the wireless communication device after transmitting the second down link signal, a third transmission signal is transmitted at a third transmission power, and a third transmission power is determined in response to the first down link signal and based on the second transmission power.

17. A wireless base station according to claim 16, wherein said receiver receives the first and second uplink signals before receiving an uplink data signal from the wireless communication device, and the third uplink signal comprises the uplink data signal.

18. A wireless base station according to claim 16, further comprising a controller which is coupled to said receiver and transmitter, said controller generating a transmission power control information, wherein
the second down link signal comprises the transmission power control information.

19. A wireless base station according to claim 18, wherein the transmission power control information comprises one of a direction to increase a transmission power and a direction to decrease a transmission power, and the third transmission power is determined by modifying the second transmission power according to one of the directions.

20. A wireless communication device according to claim 18, wherein the transmission power control information is generated based on a reception quality of the second uplink signals.

21. A wireless communication device according to claim 19, wherein the reception quality is a signal to interference ratio, and the transmission power control information comprises the direction to decrease a transmission power when the reception quality is more than a predetermined value and comprises the direction to increase a transmission power when the reception quality is less than the predetermined value.

22. A wireless communication system comprising;
a wireless communication device ; and
a wireless base station, wherein
said wireless communication device comprises:

a monitor which monitors a wireless propagation condition between said wireless communication device and the wireless base station, said monitor detecting a fluctuation of the wireless propagation condition;
a communication device transmitter which is coupled to said monitor, said communication device transmitter transmitting a first uplink signal at a first transmission power to the wireless base station after the monitor detects the fluctuation of the wireless propagation condition.
a communication device receiver which is coupled to said monitor, said communication device receiver receiving a first downlink signal; and
a controller which is coupled to said monitor, said communication device receiver, and said communication device transmitter, said controller determining and storing a second transmission power of a second uplink signal after said communication device receiver receives the first down link signal, the second transmission power being determined based on the first transmission power, and the second uplink signal being transmitted by said communication device transmitter at the second transmission power to the wireless base station after the reception of the first down link signal; and said wireless base station comprises:

a base station receiver which receives the first uplink signal from the wireless communication device, and receives a second uplink signal from the wireless communication device; and
a base station transmitter which is coupled to said base station receiver, said base station transmitter transmitting the first down link signal to the wireless communication device in response to the first uplink signal when said base station receiver receives the first uplink signal.

23. A wireless communication device comprising:

a monitoring means for monitoring a wireless propagation condition between said wireless communication device and a wireless base station, and for detecting a fluctuation of the wireless propagation condition;

a transmitting means for transmitting a first uplink signal at a first transmission power to the wireless base station after the monitoring means detects the fluctuation of the wireless propagation condition;

a receiving means for receiving a first downlink signal responsive to the first uplink signal from the wireless base station; and

a controlling means for determining and storing a second transmission power of a second uplink signal after said receiving means receives the first down link signal, the second transmission power being determined based on the first transmission power, and the second uplink signal being transmitted by said transmitting means at the second transmission power to the wireless base station after the reception of the first down link signal.

24. A wireless base station comprising:

a receiving means for receiving a first uplink signal from the wireless communication device, the first uplink signal being transmitted from communication device after a fluctuation of a wireless propagation condition between said wireless base station and the wireless communication system is detected, and the first uplink signal being transmitted at a first transmission power, and

a transmitting means for transmitting a first down link signal to the wireless communication device in response to the first uplink signal after said receiving means receives the first uplink signal; wherein

said receiving means receives a second uplink signal from the wireless communication device, the second transmission signal is transmitted at a second transmission power, and the second transmission power is determined in response to the first down link signal and based on the first transmission power.

25. A wireless communication system comprising;
        a wireless communication device; and
        a wireless base station, wherein
    said wireless communication device comprises:

a monitoring means for monitoring a wireless propagation condition between said wireless communication device and the wireless base station, and for detecting a fluctuation of the wireless propagation condition;

a communication device transmitting means for transmitting a first uplink signal at a first transmission power to the wireless base station after the monitoring means detects the fluctuation of the wireless propagation condition;

a communication device receiving means for receiving a first downlink signal; and

a controlling means for determining and storing a second transmission power of a second uplink signal after said communication device receiving means receives the first down link signal, the second transmission power being determined based on the first transmission power, and the second uplink signal being transmitted by said communication device transmitting means at the second transmission power to the wireless base station after the reception of the first down link signal; and

said wireless base station comprises:

a base station receiving means for receiving the first uplink signal from the wireless communication device, and for receiving a second uplink signal from the wireless communication device; and

a base station transmitting means for transmitting the first down link signal to the wireless communication device in response to the first uplink signal after said base station receiving means receives the first uplink signal.

26. A control method for a wireless communication system comprising:

monitoring a wireless propagation condition between said wireless communication device and the wireless base station;

detecting a fluctuation of the wireless propagation condition;

transmitting a first uplink signal at a first transmission power to the wireless base station after the fluctuation of the wireless propagation condition is detected;

receiving a first downlink signal responsive to the first uplink signal from the wireless base station;

determining and storing a second transmission power of a second uplink signal after the first down link signal is received, the second transmission power being determined based on the first transmission power; and

transmitting the second uplink signal at the second transmission power to the wireless base station after the reception of the first down link signal.

**27.** A control method for a wireless communication system comprising:

receiving a first uplink signal from the wireless communication device, the first uplink signal being transmitted from communication device after a fluctuation of a wireless propagation condition between said wireless base station and the wireless communication system is detected, and the first uplink signal being transmitted at a first transmission power;

transmitting a first down link signal to the wireless communication device in response to the first uplink signal after the first uplink signal is received; and

receiving a second uplink signal from the wireless communication device, the second transmission signal is transmitted at a second transmission power, and the second transmission power is determined in response to the first down link signal and based on the first transmission power.

**28.** A control method for a wireless communication system comprising:

monitoring a wireless propagation condition between a wireless communication device and a wireless base station;

detecting a fluctuation of the wireless propagation condition;

transmitting from the wireless communication device a first uplink signal at a first transmission power to the wireless base station after the fluctuation of the wireless propagation condition is detected;

receiving the first uplink signal from the wireless communication device;

transmitting from the wireless base station a first down link signal to the wireless communication device in response to the first uplink signal;

receiving the first downlink signal from the wireless base station;

determining and storing a second transmission power of a second uplink signal after the first down link signal is received, the second transmission power being determined based on the first transmission power; and

transmitting from the wireless communication device the second uplink signal at the second transmission power to the wireless base station after the reception of the first down link signal.

# Fig. 1

WIRELESS BASE STATION APPARATUS

RECEIVER → RACH DETECTOR → PILOT DEMODULATOR → SIR DETECTOR → TRANSMIT POWER CONTROL INFORMATION GENERATOR

8   2   4   5   6

302 SIR DETECTION RESULT

3

AICH GENERATOR

1

7

TRANSMITTER ← CPICH GENERATOR

9

201 RACH PREAMBLE

RACH MESSAGE

DPCCH
} 202
206

TRANSMIT POWER CONTROL INFORMATION — 203

AICH — 204

CPICH — 204

DPCCH — 204

16

102

MOBILE STATION

14

TRANSMITTER ← TRANSMIT POWER CONTROLLER — 13

15

RECEIVER → CPICH POWER MONITOR → RACH CONTROLLER

11   12

301 RACH TRANSMISSION CONTROL SIGNAL

Fig. 2

WIRELESS
COMMUNICATION DEVICE

WIRELESS
BASE STATION

S500 — TRANSMITTING A PILOT SIGNAL

S501 — MONITORING
CPICH

S502 — DETECTING
A FLUCTUATION

TRANSMITTING A PREAMBLE PART OF RACH AT A CERTAIN POWER        S503

S504 — RENEWING AN INITIAL POWER
TO BE EQUAL TO THE FIRST POWER

TRANSMITTING AICH
S505

TRANSMITTING A MESSAGE PART OF RACH AT A INITIAL POWER
S506

S507 — GENERATING
A POWER CONTROL INFORMATION

TRANSMITTING THE POWER CONTROL INFORMATION
S508

S509 — MODIFYING THE INITIAL POWER

STARTING TO TRANSMIT DPCCH AT THE
INITIAL POWER WHEN NECESSARY
S510

14

# Fig. 3

```
                          ┌──────────┐
                          │  START   │
                          └────┬─────┘
                               │
     RECEIVE MESSAGE           │         RECEIVE PREAMBLE
         ┌─────────────────────┘────────────────┐
         │                                       │
         │          S102                   S101  │
         ▼                                       ▼
┌─────────────────┐                   ┌─────────────────┐
│ ESTIMATE CHANNEL│                   │  TRANSMIT AICH  │
└────────┬────────┘                   └────────┬────────┘
         │                                     │
         ▼                                     │
┌─────────────────┐                            │
│  CALCULATE SIR  │── S103                     │
└────────┬────────┘                            │
         │                                     │
         │            S104                     │
         ▼                                     │
  NO   ◇─────────────◇                         │
 ◄─────│ SIR ESTIMATE>│                        │
       │ SIR THRESHOLD?│                       │
       ◇─────────────◇                         │
         │       YES                           │
  S105   │        │                            │
┌────────────┐  ┌─────────────┐                │
│ GENERATE   │  │  GENERATE   │                │
│ POWER-UP   │  │ POWER-DOWN  │── S106          │
│INFORMATION │  │ INFORMATION │                │
└─────┬──────┘  └──────┬──────┘                │
      │                │                        │
      └───────►────────┤                        │
                       ▼                        │
         ┌──────────────────────┐               │
         │      GENERATE        │               │
         │ AND SEND TRANSMIT    │── S107         │
         │  POWER CONTROL       │               │
         │   INFORMATION        │               │
         └──────────┬───────────┘               │
                    └───────────┬───────────────┘
                                ▼
                          ┌──────────┐
                          │   END    │
                          └──────────┘
```

# Fig. 4

Fig. 4 — Flowchart:

START

S201: SIGNAL RECEIVED FROM WIRELESS BASE STATION?
- NO → S209
- YES → RECEIVE CPICH

S202: MEASURE CPICH POWER (x)

S203: |x-y|>VARIATION THRESHOLD (z)?
- NO →
- YES → S204

S204: TRANSMIT PREAMBLE

S205: HOLD THE PREAMBLE TRANSMIT POWER VALUE AS INITIAL TRANSMIT POWER VALUE

S206: HOLD CPICH POWER VALUE (x) MEASURED THIS TIME (y)

S209: AICH NOT RECEIVED FOR A PREDETERMINED PERIOD AFTER PREAMBLE TRANSMISSION?
- YES →
- NO →

S210: RETRANSMIT PREAMBLE AT TRANSMIT POWER INCREASE FROM INITIAL TRANSMIT POWER VALUE WHICH THE MOBILE STATION HOLDS

S211: HOLD PREAMBLE TRANSMIT POWER VALUE OF THIS TIME AS INITIAL TRANSMIT POWER VALUE

RECEIVE AICH

S207: TRANSMIT MESSAGE AT INITIAL TRANSMIT POWER VALUE

RECEIVE TRANSMIT POWER CONTROL INFORMATION

S208: REFLECT CONTROL INFORMATION IN INITIAL TRANSMIT POWER VALUE

END

EP 1 578 031 A2

# Fig. 5

START

S201 SIGNAL RECEIVED FROM WIRELESS BASE STATION?

NO → (to S209)

YES

RECEIVE CPICH

MEASURE CPICH POWER (x) — S202

S212 $x <$ POWER THRESHOLD (p) ?

NO

YES

S203 $|x-y| >$ VARIATION THRESHOLD (z)?

NO

YES

TRANSMIT PREAMBLE — S204

HOLD THE PREAMBLE TRANSMIT POWER VALUE AS INITIAL TRANSMIT POWER VALUE — S205

HOLD CPICH POWER VALUE (x) MEASURED THIS TIME (y) — S206

RECEIVE AICH

TRANSMIT MESSAGE AT INITIAL TRANSMIT POWER VALUE — S207

RECEIVE TRANSMISSION POWER CONTROL INFORMATION

REFLECT CONTROL INFORMATION IN INITIAL TRANSMIT POWER VALUE — S208

S209 AICH NOT RECEIVED FOR A PREDETERMINED PERIOD AFTER PREAMBLE TRANSMISSION?

YES

NO

RETRANSMIT PREAMBLE AT TRANSMIT POWER INCREASE FROM INITIAL TRANSMIT POWER VALUE WHICH THE MOBILE STATION HOLDS — S210

HOLD PREAMBLE TRANSMIT POWER VALUE OF THIS TIME AS INITIAL TRANSMIT POWER VALUE — S211

END

EP 1 578 031 A2

## Fig. 6

```
                        ( START )
                            │
                            ▼
            NO      ┌───────────────────┐  S201
        ┌───────────│ SIGNAL RECEIVED   │
        │           │ FROM WIRELESS BASE│
        │           │ STATION?          │
        │           └───────────────────┘
        │                   │ YES
        ▼                                                   │                │
┌───────────────┐                                    RECEIVE          RECEIVE
│ AICH NOT      │  S209          RECEIVE CPICH         AICH            TRANSMIT
│ RECEIVED FOR A│          ┌──────────────────────┐                   POWER
│ PREDETERMINED │          │ MEASURE CPICH POWER(x)│ ~S202             CONTROL
│ PERIOD AFTER  │          └──────────────────────┘                   INFORMATION
│ PREAMBLE      │ YES             │        S213
│ TRANSMISSION? │          ┌──────────────────┐
└───────────────┘    NO     │  AVERAGING       │
        │ NO        ┌───────│ PERIOD TERMINATED?│
        │           │       └──────────────────┘
        │      S214 ▼            │ YES    S215
        │   ┌──────────────┐ ┌──────────────────────┐   ┌──────────────┐ ┌──────────────┐
        │   │ HOLD x FOR   │ │ CALCULATE AVERAGE    │   │ TRANSMIT     │ │ REFLECT      │
        │   │ USE IN       │ │ VALUE (x̄)            │   │ MESSAGE      │ │ CONTROL      │
        │   │ AVERAGE VALUE│ └──────────────────────┘   │ INITIAL      │ │ INFORMATION  │
        │   │ CALCULATION  │         │        S203       │ TRANSMIT     │ │ IN INITIAL   │
        │   └──────────────┘   ┌──────────────┐         │ POWER VALUE  │ │ TRANSMIT     │
 S210   ▼                  NO  │ |x̄-ȳ|>VARIATION│         └──────────────┘ │ POWER VALUE  │
┌──────────────────┐    ┌──────│ THRESHOLD (z)?│              S207          └──────────────┘
│ RETRANSMIT       │    │      └──────────────┘                                 S208
│ PREAMBLE AT      │    │            │ YES
│ TRANSMIT POWER   │    │      ┌──────────────────┐
│ INCREASE FROM    │    │      │ TRANSMIT PREAMBLE │ ~S204
│ INITIAL TRANSMIT │    │      └──────────────────┘
│ POWER VALUE WHICH│    │            │
│ THE MOBILE       │    │      ┌──────────────────────┐
│ STATION HOLDS    │    │      │ HOLD THE PREAMBLE     │
└──────────────────┘    │      │ TRANSMIT POWER VALUE  │ ~S205
 S211   │               │      │ AS INITIAL TRANSMIT   │
        ▼               │      │ POWER VALUE           │
┌──────────────────┐    │      └──────────────────────┘
│ HOLD PREAMBLE    │    │            │
│ TRANSMIT POWER   │    │      ┌──────────────────────┐
│ VALUE OF THIS    │    └─────▶│ HOLD CPICH POWER VALUE│ ~S206
│ TIME AS INITIAL  │          │ (x̄) MEASURED THIS     │
│ TRANSMIT POWER   │          │ TIME (ȳ)              │
│ VALUE            │          └──────────────────────┘
└──────────────────┘                 │
        │                            ▼
        └──────────────────────▶( END )
```

EP 1 578 031 A2

Fig. 7

DOWNLINK DPCH

DPDCH (DATA SIGNAL)

POWER-DOWN COMMAND

DPCCH

POWER-UP COMMAND

DATA TRANSMISSION START COMMAND

SCCPCH

DPCH (ACKNOWLEDGE)

GRADUALLY INCREASE TRANSMIT POWER

DPCCH

UPLINK DPCH

DPDCH (DATA SIGNAL)

UPLINK AND DOWNLINK SYNCHRONIZATION ESTABLISHED